Europäisches Patentamt

European Patent Office

Office européen des brevets

(19)

(11) Numéro de publication : **0 520 899 A1**

(12) # DEMANDE DE BREVET EUROPEEN

(21) Numéro de dépôt : **92401802.1**

(22) Date de dépôt : **25.06.92**

(51) Int. Cl.$^5$ : **H04L 13/00, H04L 13/00**

(30) Priorité : **25.06.91 FR 9107791**

(43) Date de publication de la demande :
**30.12.92 Bulletin 92/53**

(84) Etats contractants désignés :
**AT BE CH DE DK ES FR GB IT LI NL SE**

(71) Demandeur : **ALCATEL BUSINESS SYSTEMS
12, rue de la Baume
F-75008 Paris (FR)**

(72) Inventeur : **Couturier, Patrice
1, rue Alfred de Vigny
F-95600 Eaubonne (FR)**

(74) Mandataire : **Schaub, Bernard et al
c/o SOSPI 14-16 rue de la Baume
F-75008 Paris (FR)**

(54) **Dispositif d'intercommunication multimedia.**

(57) Installation d'intercommunication multimédia, comprenant l'image animée, entre plusieurs utilisateurs chacun muni d'une station de travail (2,4,1) du genre micro-ordinateur.

On prévoit, pour chaque utilisateur, une nouvelle unité centrale (13) qui traite directement les pixels (8) de l'écran (1). Elle reçoit et réémet des informations d'image animée (16), de son (18,19,20), et d'écriture . Les informations d'écriture sont avantageusement élaborées par les organes d'écriture (2,3) qui équipent déjà la station de travail.

FIG. 3

La présente invention se rapporte à un dispositif d'intercommunication de personne à personne, ce dispositif étant "multimédia", c'est à dire apte à transmettre, dans un sens comme dans l'autre, aussi bien les images, animées ou fixes, que la voix et les données d'écriture.

Il existe actuellement des dispositifs dits " de visio-conférence" qui sont des systèmes spécialisés d'intercommunication, multimédia au moins en ce qui concerne la voix et l'image animée, et généralement utilisés dans un même batiment et entre deux salles de conférence spécialement équipées à cet effet.

Ces dispositifs connus sont d'utilisation très limitée, car ils obligent les utilisateurs à se déplacer dans ces salles de visio-conférence spécialisées, alors qu'il serait bien plus pratique pour ces utilisateurs de pouvoir dialoguer en multimédia avec leurs interlocuteurs sans avoir chacun à quitter son propre bureau.

Une solution consisterait à prévoir un système entier et spécialisé dans ce but, ce qui conduirait à prévoir dans chaque bureau un terminal multimédia complet et spécialement adapté: Cette solution, quoiqu'à priori techniquement très satisfaisante, aurait pour inconvénient d'être extrémement lourde en coût de réalisation et exploitation, car elle nécessiterait l'installation d'un terminal spécial, avec donc son propre clavier et son propre écran, dans chaque bureau, alors que normalement ce bureau est généralement actuellement déjà équipé d'un micro-ordinateur, ou station de travail analogue, qui possède lui-aussi un clavier et un écran et qu'en conséquence il paraîtrait naturel et souhaitable d'utiliser ce clavier et cet écran pour l'intercommunication multimédia sans avoir à en prévoir d'autres spécialement pour cette utilisation.

L'utilisation de ces stations de travail du genre micro-ordinateur ou "P.C" en vue de l'intercommunication multimédia est cependant à priori pratiquement inconcevable. En effet :

- toutes ces stations de travail ne sont pas nécessairement compatibles entre elles, que ce soit au niveau physique ( "hardware" ) ou au niveau logique ("software");
- les unités centrales qui équipent ces mêmes stations de travail et les réseaux sur lesquels elles sont connectées ne sont généralement pas aptes à transmettre l'image animée, qui exige un bien trop grand débit d'informations.

L'invention vise à résoudre ces difficultés, et propose donc un dispositif d'intercommunication multimédia, avec en particulier possibilité de transmission et réception d'image animée, qui permette l'utilisation de l'écran, ainsi qu'éventuellement du clavier ou autre moyen d'écriture, qui équipe normalement chaque station de travail personnelle et courante, du genre micro-ordinateur ou "P.C". Elle se rapporte à cet effet à une installation d'intercommunication multimédia entre plusieurs utilisateurs possédant chacun déjà une station de travail, par exemple du genre micro-ordinateur ou "P.C", avec écran, unité centrale, et moyens d'écriture au minimum comprenant un clavier, cette installation comportant, par utilisateur, une autre unité centrale ou "C.P.U." spécialisée et au moins apte à se brancher directement sur l'écran de cette station de travail de manière à traiter des éléments d'image, ou "pixels", de cet écran en fonction de l'intercommunication multimédia souhaitée, et cette nouvelle unité centrale étant par ailleurs apte à recevoir des moyens locaux de prise d'image, animée ou non, ainsi que des moyens locaux d'écriture et des moyens locaux de prise et reproduction de son de façon à pouvoir réaliser ainsi, via une liaison d'interconnexion, l'intercommunication multimédia souhaitée entre tous ces utilisateurs.

Préférentiellement, cette nouvelle unité centrale est en outre prévue pour se brancher directement sur le clavier, et/ou autres moyens d'écriture éventuels, existant déjà sur la station de travail de cet utilisateur.

De toute façon, l'invention sera bien comprise, et ses avantages et autres caractéristiques ressortiront, lors de la description suivante d'un exemple non-limitatif de réalisation, en référence au dessin schématique annexé dans lequel :

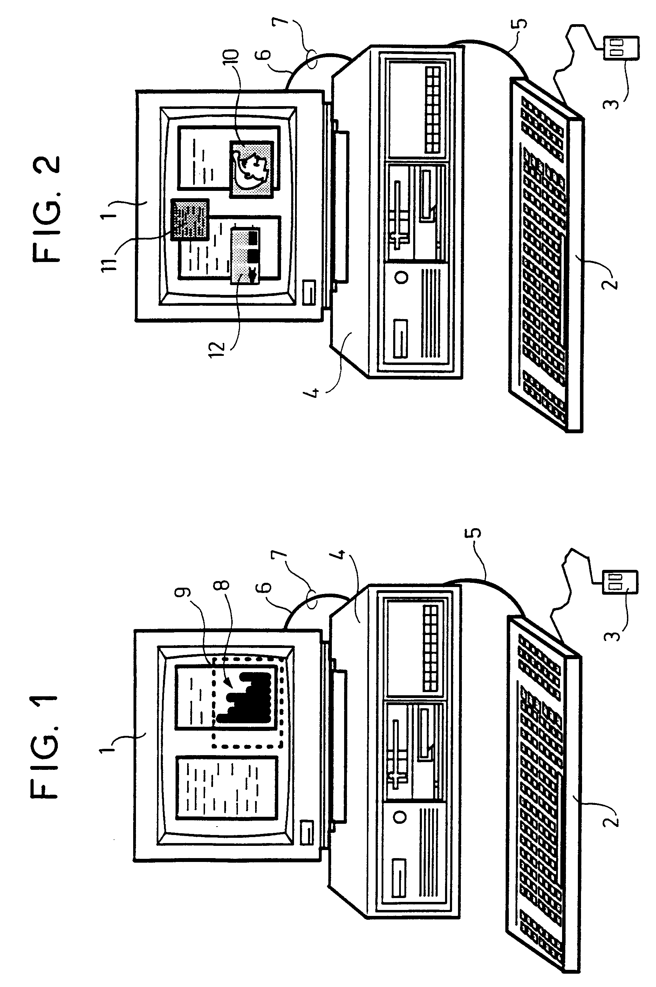

. Figures 1 et 2 schématisent une des finalités de l'invention , à l'émission d'une part et à la réception d'autre part; et

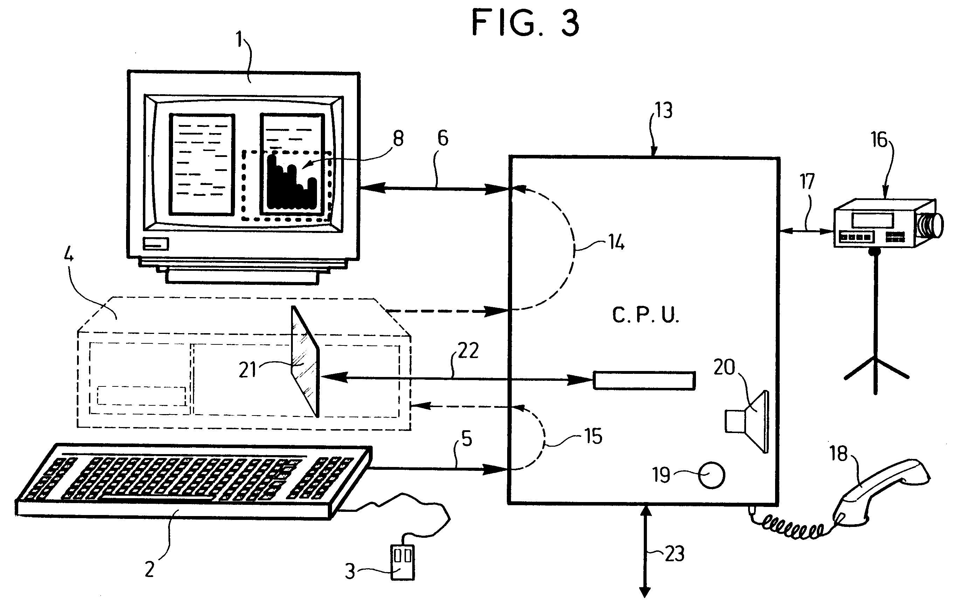

. Figure 3 est un schéma synoptique de cette installation, un seul terminal d'utilisateur étant représenté sur ce schéma.

Aux figures 1 et 2 est représentée une station de travail du genre micro-ordinateur ou "P.C", comme beaucoup de gens en disposent actuellement dans leur bureau ou même à domicile, une telle station de travail étant classiquement composée d'un écran 1, d'un clavier 2 avec éventuellement une "souris" 3 ou autre organe d'écriture, et d'une unité centrale propre 4 qui n'est compatible qu'avec certaines autres stations de travail de caractéristiques bien déterminées. Le clavier 2 est relié à l'unité centrale 4 par une liaison 5 dans laquelle transitent les données d'écriture ou "datas" et l'unité centrale 4 est reliée à l'écran 1 par une liaison 6 dans laquelle transitent les éléments d'image ou "pixels".

L'invention se base sur la remarque selon laquelle si l'on "ouvre" au point référencé 7 la liaison 6 dans laquelle ne passent que les données relatives aux pixels (éléments d'image) et que l'on intercale à cet endroit là une autre unité logique de gestion, cette unité logique peut alors, indépendamment de l'unité spécifique 4, agir à loisir, et à grand débit, sur ces pixels. Elle peut par exemple, comme schématisé en Figure 1, sélectionner une image 8 dans un cadre d'écran défini 9, et prélever en conséquence cette image 8 pour la transmettre via une ligne téléphonique vers une autre unité logique de même type et un autre écran, qui peut alors être lui-aussi un simple écran de micro-ordinateur. Elle peut aussi, comme schématisé en Figure 2, substituer aux pixels venant normalement de l'unité 4 une autre information placée par exemple dans un cadre prédéfini de l'écran 1, en mode dit "P.I.P" (image dans l'image). Cette autre information peut être par exemple :

- une image fixe ou animée 10, le débit d'introduction de pixels sur un écran 1 de microordinateur par une unité extérieure pouvant alors être compatible avec le débit élevé que nécessite l'image animée;
- un traitement de texte 11;
- un tableur 12
- etc...

Une réalisation basée sur ce principe est donc représentée en Figure 3. Cette installation comporte une unité centrale ou "C.P.U" spécifique 13 par utilisateur, qui est reliée de manière bidirectionnelle à l'écran 1 que possède déjà cet utilisateur, c'est à dire par exemple l'écran de son micro-ordinateur, de manière à pouvoir y introduire ou prélever les pixels souhaités.

L'unité centrale 4 n'intervient alors théoriquement plus, et a en conséquence été figurée en pointillés. L'unité centrale nouvelle 13 vient, comme représenté, s'intercaler sur le fil de liaison 6 entre l'unité 4 et l'écran 1 d'une part, et sur le fil de liaison 5 entre le clavier 2 et l'unité 4 d'autre part.

Des possibilités de liaison directe 14 et 15, gérées par la nouvelle unité 13, subsistent toujours pour que l'utilisateur puisse utiliser son micro-ordinateur indépendamment comme il le faisait auparavant.

La nouvelle unité centrale 13 reçoit et réémet non seulement les pixels relatifs par exemple à l'image 8 précitée alors préalablement introduite à l'écran à l'aide du clavier 2, mais aussi des données d'écriture, communiquées par le clavier 2, la souris 3, des données d'image fixe ou animée captées localement par une caméra 16 et transmises par une liaison 17, et des données vocales captées, transmises, et reproduites, soit par un combiné téléphonique 18, soit par un dispositif "mains libres" comportant un microphone 19 et un haut parleur 20.

Dans la conception de l'invention, la nouvelle unité centrale 13 vient donc, pour la communication multimédia de personne à personne, prendre la place de l'unité 4, avec en plus la possibilté de recevoir d'autres données (caméra 16, combiné 18,...). Il est donc, dans une installation, normalement prévu une unité centrale nouvelle 13 par usager. Cette unité nouvelle 13 est reliée aux autres unités centrales nouvelles des autres usagers par une ligne 23, de sorte que toutes les données sont émises et reçues de manière bidirectionnelle

Une commodité supplémentaire consiste à prendre en compte le raccordement des cartes standard de réseaux locaux du marché se trouvant dans l'unité centrale 4 du micro-ordinateur par une liaison 22 raccordée à l'unité nouvelle 13. Ceci permet à l'unité centrale 4 d'être en liaison avec d'autres unités via l'unité 13 et la ligne 23.

A noter en outre que l'utilisation du clavier 2 et de l'écran 1 en combinaison avec l'unité centrale nouvelle 13 permet la création chez chaque utilisateur d'un "terminal-X" utilisable, via la liaison d'interconnexion 23, comme serveur de fenêtre.

Comme il va de soi, l'invention n'est pas limitée à l'exemple de réalisation qui vient d'être décrit, et est bien au contraire d'être susceptible d'être mise en oeuvre selon de nombreuses variantes et formes d'exécutions équivalentes, voire même plus perfectionnées.

## Revendications

1 - Installation d'intercommunication "multimédia" entre plusieurs utilisateurs possédant chacun une station de travail (2,4,1), par exemple du genre micro-ordinateur ou "P.C", avec écran (1), unité centrale (4), et moyens d'écriture (2,3) comprenant au minimum un clavier (2), caractérisée en ce qu'elle comporte, par utilisateur, une autre unité centrale ou "C.P.U" (13) spécialisée et au moins apte à se brancher directement sur l'écran (1) de cette station de travail (2,4,1) de manière à traiter des éléments d'image ou "pixels" de cet écran (1) en fonction de l'intercommunication multimédia souhaitée, cette nouvelle unité centrale (13) étant par ailleurs apte à recevoir des moyens locaux (16) de prise d'image, animée ou non, ainsi que des moyens locaux (2,3) d'écriture et des moyens locaux (18,19,20) de prise et reproduction du son, de façon à pouvoir ainsi réaliser, via une liaison (23) d'interconnexion avec les autres unités centrales nouvelles de même type (13) alors installées respectivement chez chaque utilisateur, l'intercommunication multimédia souhaitée entre tous ces utilisateurs.

2 - Installation selon la revendication 1, caractérisée en ce que la nouvelle unité centrale (13) vient s'intercaler sur la liaison (6) reliant normalement l'unité centrale (4) de ladite station de travail à l'écran (1) de cette dernière.

3 - Installation selon la revendication 2, caractérisée en ce que cette unité centrale nouvelle (13) est équipée de moyens (14) pour reconnecter directement, si nécessaire, l'unité centrale (4) de cette station de travail à son écran (1).

4 - Installation selon l'une des revendications 1 à 3, caractérisée en ce que cette nouvelle unité centrale (13) est en outre prévue pour se brancher directement sur le clavier (2) et/ou autres moyens d'écriture (3) existant déjà sur ladite station de travail.

5 - Installation selon la revendication 4, caractérisée en ce que l'unité centrale nouvelle (13) est équipée de moyens (15) pour brancher ces moyens d'écriture (2,3) soit sur elle-même soit sur l'unité centrale (4) de ladite installation de travail.

**6** - Installation selon l'une des revendications 1 à 5, caractérisée en ce que l'unité centrale (4) de ladite station de travail est en outre munie de moyens électroniques (21,22) de liaison avec cette unité centrale nouvelle (13), ces moyens électroniques étant aptes à permettre la transmission de données via cette unité centrale nouvelle (13).

**7** - Installation selon l'une des revendications 1 à 6, caractérisée en ce que l'utilisation du clavier (2) et de l'écran (1) de ladite station de travail en combinaison avec la nouvelle unité centrale est prévue de façon à créer ainsi un terminal-X utilisable comme serveur de fenêtre.

FIG. 1

FIG. 2

EP 0 520 899 A1

FIG. 3

**Office européen des brevets**

# RAPPORT DE RECHERCHE EUROPEENNE

Numero de la demande

EP     92 40 1802

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | NTT REVIEW vol. 1, no. 1, Mai 1989, TOKYO, JP pages 65 - 72 K. HISHIYAMA ET AL. 'Private digital videotex terminals' * alinéa 2.3; figure 4 * * alinéa 3.3; figure 9 * | 1,4-6 | H04L13/00 |
| A | | 2,3,7 | |
| A | IEEE INTERNATIONAL CONFERENCE ON COMMUNICATIONS '86 22 Juin 1986, TORONTO , CA pages 1509 - 1513 S. TSURUTA ET AL. 'Intelligent communication terminal for integrating voice, data and video signals' * alinéa 2.2 -alinéa 4.1 * | 1-6 | |
| A | IEEE GLOBAL TELECOMMUNICATIONS CONFERENCE vol. 1, 1 Décembre 1986, HOUSTON ,US pages 479 - 483 A. SCIARAPPA 'A multimedia workstation with real time capabilities in a public network (ISDN)' | 1-6 | DOMAINES TECHNIQUES RECHERCHES (Int. Cl.5)<br><br>H04L<br>H04M |
| A | FR-A-2 642 248 (J. BARDA) * abrégé; figure 1 * | 1-6 | |
| A | US-A-4 931 950 (B.A. ISLE ET AL.) * abrégé * | 1-6 | |

Le présent rapport a été établi pour toutes les revendications

| Lieu de la recherche | Date d'achèvement de la recherche | Examinateur |
|---|---|---|
| LA HAYE | 02 OCTOBRE 1992 | STAESSEN B.F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)